# EUROPEAN PATENT APPLICATION

(11) **EP 4 800 834 A1**
(43) Date of publication of application: **02.09.2026**
(21) Application number: 26150529.1
(22) Date of filing: 07.01.2026
(51) Int. Cl.: H01M 50/609, H01M 50/673

(54) **ELECTROLYTE STORAGE DEVICE AND METHOD OF MANUFACTURING THE SAME**

(30) Priority: 28.02.2025 KR 20250026451
(71) Applicant: SAMSUNG SDI CO., LTD., Yongin-si, Gyeonggi-do 17084 (KR); UIF (University Industry Foundation), Yonsei University, Seoul 03722 (KR)
(72) Inventor: SON, Namyoung, 17084 Yongin-si (KR); KIM, Dae-Eun, 03722 Seoul (KR)
(74) Representative: Marks & Clerk LLP

(57) **Abstract**

Disclosed are an electrolyte storage device and a method of manufacturing the electrolyte storage device, and more particularly, an electrolyte storage device configured such that a fine pattern is formed inside the electrolyte storage device to increase surface hydrophobicity, thereby preventing an electrolyte from adhering to the electrolyte storage device, and a method of manufacturing the electrolyte storage device.

## Description

### BACKGROUND

### 1. Technical Field

The present disclosure relates to an electrolyte storage device and a method of manufacturing the electrolyte storage device, and more particularly, to an electrolyte storage device configured such that a fine pattern is formed inside the electrolyte storage device to increase surface hydrophobicity, thereby preventing an electrolyte from adhering to the electrolyte storage device, and a method of manufacturing the electrolyte storage device.

### 2. Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

Conventional secondary battery manufacturing processes include individual manufacturing processes that are performed by automated equipment. Among the manufacturing processes, a process of injecting an electrolyte, which is a core element for secondary batteries, may be carried out.

Particularly, an electrolyte injection process for secondary batteries having a cylindrical shape may be performed as follows. A cylindrical secondary battery may be loaded onto a tray-type component referred to as a "carrier," and the electrolyte injection process may be performed. In the present specification, a cylindrical secondary battery is disclosed as a representative case; however, the present disclosure is not limited to the shape of the battery. The carrier may be an apparatus configured to store an electrolyte and inject the electrolyte into a secondary battery. In particular, the electrolyte may be maintained in a stored state in a special component referred to as a hopper, which is one of the components of the carrier, before being injected into the secondary battery. Such an electrolyte injection process may include creating a vacuum inside the secondary battery, such that the electrolyte stored in the hopper at atmospheric pressure is naturally introduced into the secondary battery by a pressure difference between the atmospheric pressure and the vacuum pressure in the hopper.

However, despite the pressure difference created by the vacuum, a portion of the electrolyte may remain adhered to an inner surface of the hopper due to adhesion rather than being injected into the secondary battery. Such residual electrolyte may result in a lack of electrolyte content inside the secondary battery, which may negatively affect performance and quality of the secondary battery. Furthermore, the residual electrolyte may cause contamination of the hopper, which is a special component, thereby acting as a factor that undermines consistency of the electrolyte injection process.

The above information disclosed in this Background section is for enhancement of understanding of the background of the present disclosure, and therefore, it may contain information that does not constitute related (or prior) art.

### SUMMARY

Embodiments of the present disclosure are directed to providing an electrolyte storage device configured such that a fine pattern is formed therein to increase surface hydrophobicity, thereby preventing an electrolyte from adhering thereto, and a method of manufacturing the electrolyte storage device.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

An electrolyte storage device according to embodiments of the present disclosure may include: an electrolyte housing configured to store an electrolyte; and an inlet port located in one surface of the electrolyte housing, and configured to enable the electrolyte to be injected into a secondary battery. The electrolyte housing may include on an inner surface thereof a pattern including three-dimensional structures successively arranged.

In embodiments, each of the structures may be formed in a circular, triangular, quadrangular, pentagonal, or hexagonal shape.

In embodiments, each of the structures may have a height ranging from 40 µm to 60 µm.

In embodiments, each of the structures may have a diameter or side length ranging from 180 µm to 220 µm.

In embodiments, the pattern may have a spacing between the structures in a range from 80 µm to 120 µm.

In embodiments, the inner surface formed with the pattern may be formed by heating a resin including any one of polypropylene, polyethylene, polystyrene, polyamide, or polyethylene terephthalate, the resin being applied to a plate in which an engraved shape of the pattern is formed.

In embodiments, the pattern may be formed by pressing a mold shaft, in which an engraved shape of the pattern is formed, onto the inner surface.

In embodiments, a first pattern may be formed in a first area of the inner surface, and a second pattern including structures different from those of the first pattern may be formed in a second area of the inner surface.

In embodiments, the pattern may be formed on 70% or more of an area of the inner surface.

In embodiments, the pattern may be formed such that a static contact angle of each of the structures is 110 degrees or more.

In embodiments, the pattern may be formed such that an area density of the structures is 0.3 or more.

A method of manufacturing an electrolyte storage device configured to store an electrolyte and inject the electrolyte into a secondary battery according to embodiments of the present disclosure may include: providing a plate; forming an engraved shape of a pattern on one surface of the plate using a laser, the pattern including three-dimensional structures successively arranged; applying a material of a surface layer to the one surface of the plate; heating the material of the surface layer; separating the solidified surface layer from the plate; and attaching the solidified surface layer to an inner surface of the electrolyte storage device.

A method of manufacturing an electrolyte storage device configured to store an electrolyte and inject the electrolyte into a secondary battery according to embodiments of the present disclosure may include: providing a mold shaft; forming an engraved shape of a pattern on an outer surface of the mold shaft using a laser, the pattern including three-dimensional structures successively arranged; cutting the mold shaft at regular intervals; inserting the cut mold shaft into an interior of the electrolyte storage device; pressing the cut mold shaft onto an inner surface of the electrolyte storage device; and removing the mold shaft from the electrolyte storage device.

According to embodiments of the present disclosure, a pattern may be efficiently formed on an inner surface of the electrolyte storage device by a laser texturing technique.

Furthermore, according to embodiments of the present disclosure, the hydrophobicity of the inner surface of the electrolyte storage device in which the pattern is formed may be improved, thereby reducing surface adhesion.

In addition, according to embodiments of the present disclosure, there is an effect of reducing an incomplete injection phenomenon in which the electrolyte fails to be injected into the secondary battery due to the surface adhesion.

In addition, according to embodiments of the present disclosure, deterioration in battery performance and quality that may occur due to insufficient electrolyte content inside the secondary battery may be prevented.

Furthermore, according to embodiments of the present disclosure, contamination that may occur due to residual electrolyte remaining in the electrolyte storage device may be prevented, and consistency in the electrolyte injection process may be maintained.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate preferred embodiments of the present disclosure, and help to further understand the technical details of the present disclosure along with the aforementioned contents of the disclosure. Accordingly, the present disclosure should not be construed as being limited to only contents described in such drawings:
FIG. 1 is a diagram illustrating a carrier according to embodiments of the present disclosure;
FIG. 2 is a diagram illustrating an electrolyte storage device according to embodiments of the present disclosure;
FIG. 3 is a diagram illustrating a pattern formed on an inner surface of the electrolyte storage device according to embodiments of the present disclosure;
FIG. 4 is a flowchart of a method of forming a pattern according to a first embodiment of the present disclosure;
FIG. 5 is a diagram for describing the pattern forming method according to the first embodiment of the present disclosure;
FIG. 6 is a flowchart of a method of forming a pattern according to a second embodiment of the present disclosure;
FIG. 7 is a diagram for describing the pattern forming method according to the second embodiment of the present disclosure;
FIGS. 8 to 12 are diagrams for describing a pattern according to embodiments of the present disclosure; and
FIGS. 13 and 14 are diagrams illustrating a static contact angle for each pattern according to embodiments of the present disclosure.

### Detailed description

Embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of the embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present invention will be described in detail with reference to the attached drawings.

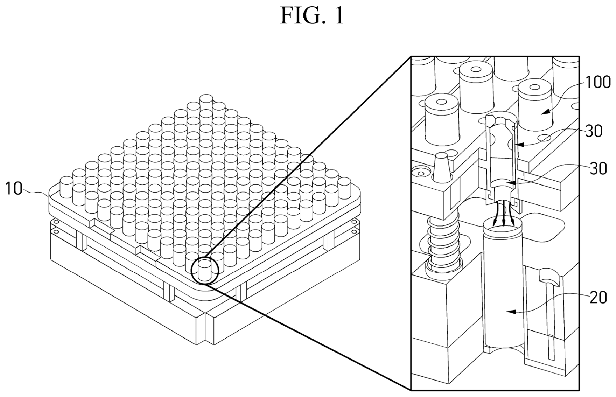

FIG. 1 is a diagram illustrating a carrier 10 according to embodiments of the present disclosure.

Referring to FIG. 1, the carrier 10 according to embodiments of the present disclosure may include a plurality of electrolyte storage devices 100.

A process of manufacturing a secondary battery 20 may include a process of injecting an electrolyte 30, which is a core element of the secondary battery 20, into the secondary battery 20. Particularly, in an electrolyte injection process for the secondary battery 20 having a cylindrical shape, the carrier 10 may be used to perform the process of injecting the electrolyte 30. An external shape of the secondary battery 20 may include various forms such as a cylindrical type, a prismatic type, or a pouch type, and is not limited thereto. FIGS. 1 to 3 illustrate an example of the carrier and a hopper for cylindrical secondary batteries, but the present disclosure is not limited thereto.

The carrier 10 may be a tray-type apparatus. A plurality of secondary batteries 20 may be loaded on the carrier 10. The carrier 10 may include a plurality of electrolyte storage devices 100 in which the electrolyte 30 is stored. For example, as shown in the drawings, the carrier 10 may be configured to allow 12×12 arrangement, that is, 144 secondary batteries 20, to be loaded thereon.

Each of the electrolyte storage devices 100 may store the electrolyte 30 and may be configured to inject electrolyte 30 into the corresponding secondary battery 20. The electrolyte storage device 100 may include a conventional hopper.

The electrolyte storage device 100 may inject the electrolyte 30 into the secondary battery 20 by various methods. For example, the electrolyte storage device 100 may be configured such that, after an interior of the secondary battery 20 is brought into a vacuum state, the electrolyte 30 stored in the electrolyte storage device 100 at atmospheric pressure is naturally introduced into the secondary battery 20 by a pressure difference between the atmospheric pressure and a vacuum pressure inside the electrolyte storage device 100.

However, in this case, despite a pressure difference created by the vacuum, a portion of the electrolyte 30 that fails to be injected into the secondary battery 20 may remain adhered to an inner surface of the electrolyte storage device 100 due to adhesion. The residual portion of the electrolyte 30 may result in a lack of electrolyte content inside the secondary battery 20, which may negatively affect performance and quality of the secondary battery 20. Furthermore, the residual portion may cause contamination of the electrolyte storage device 100, thereby hindering the consistency of the process of injecting the electrolyte 30.

The present disclosure relates to the electrolyte storage device 100 configured such that a fine pattern is formed inside the electrolyte storage device 100 to increase the surface hydrophobicity, thereby preventing the electrolyte 30 from adhering thereto, and a method of manufacturing the electrolyte storage device 100.

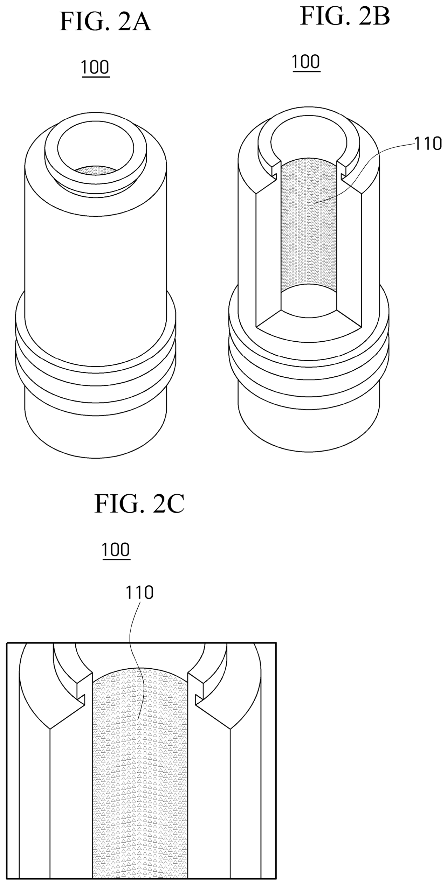

FIG. 2 is a diagram illustrating an electrolyte storage device 100 according to embodiments of the present disclosure.

Referring to FIG. 2(a), the electrolyte storage device 100 may include an electrolyte housing capable of storing the electrolyte 30. Although the electrolyte storage device 100 illustrated in the drawing includes a cylindrical electrolyte housing for the electrolyte 30, the shape of the electrolyte housing is not limited thereto and may be modified in various forms.

The electrolyte storage device 100 may include an inlet port through which the stored electrolyte 30 may be injected into the secondary battery 20. The inlet port may be located in one surface of the electrolyte housing, and may have a circular shape, as shown in the drawing. However, the shape of the inlet port may vary depending on an opening/closing structure of the secondary battery 20 or an electrolyte injection method. The inlet port according to embodiments of the present disclosure may be configured to be openable and closable, and may be operated such that the inlet port opens only at a point in time when injection of the electrolyte 30 is required.

FIGS. 2(b) and 2(c) are cutaway perspective views illustrating an internal cross-section of the electrolyte storage device 100 in one direction. Referring to FIGS. 2(b) and 2(c), a pattern 110 having a predetermined shape may be formed on the inner surface of the electrolyte storage device 100. Specifically, the pattern 110 may be formed on an inner surface of the electrolyte housing of the electrolyte storage device 100. Hereinafter, in the present specification, the inner surface of the electrolyte storage device 100 refers to the surface of the electrolyte housing of the electrolyte storage device 100.

The pattern 110 according to embodiments of the present disclosure may refer to a pattern in which three-dimensional structures having a predetermined shape are successively arranged.

The pattern 110 may be formed in a certain area of the inner surface of the electrolyte storage device 100. The pattern 110 may be formed on the entire area of the inner surface of the electrolyte housing, or may be formed only on a specific portion of the inner surface of the electrolyte housing.

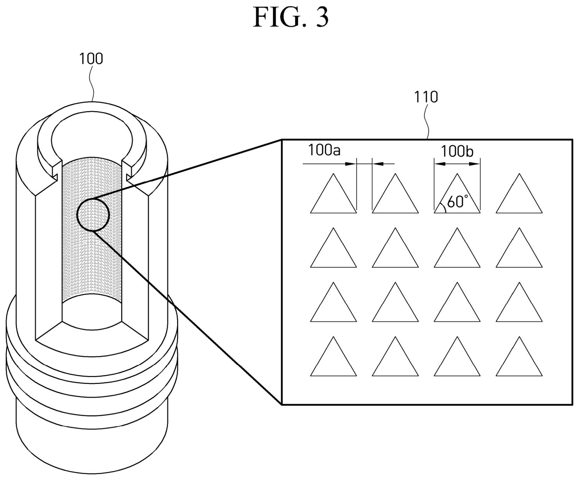

FIG. 3 is a diagram illustrating the pattern 110 formed on the inner surface of the electrolyte storage device 100 according to embodiments of the present disclosure.

Referring to FIG. 3, the pattern 110 may be formed on the inner surface of the electrolyte storage device 100 according to embodiments of the present disclosure. As described above, the pattern 110 may refer to a pattern in which three-dimensional structures having a predetermined shape are successively arranged.

Although the drawing illustrates the pattern 110 including structures having an equilateral triangular shape, the pattern 110 according to embodiments of the present disclosure may include three-dimensional structures having various shapes and sizes. The pattern 110 may be configured to include three-dimensional structures having an optimal shape and size to improve hydrophobicity of the inner surface of the electrolyte storage device 100 and to reduce adhesion.

Although the drawing illustrates a two-dimensional equilateral triangular pattern, the pattern 110 according to embodiments of the present disclosure may include three-dimensional structures having a certain height on the inner surface.

The pattern 110 according to embodiments of the present disclosure may be configured as a sequence of structures having a circular, triangular, quadrangular, pentagonal, or hexagonal shape. For example, the pattern 110 may be configured as a sequence of structures having shapes such as a circle, an equilateral triangle, a square, a regular pentagon, or a regular hexagon. Each of the structures of the pattern 110 may have a height ranging from 40 µm to 60 µm. A diameter or a side length 100b of each of the structures of the pattern 110 may range from 180 µm to 220 µm. In addition, a spacing 100a between the structures of the pattern 110 may range from 80 µm to 120 µm.

Furthermore, the pattern 110 according to embodiments of the present disclosure may include structures formed in different shapes. For example, the pattern 110 may be formed to include structures having a triangular shape on an upper portion of the inner surface of the electrolyte storage device 100, and may be formed to include structures having a pentagonal shape on a lower portion of the inner surface.

In addition, the pattern 110 according to embodiments of the present disclosure may include structures configured with different sizes and spacings. For example, on the upper portion of the inner surface of the electrolyte storage device 100, the structures may have a height of 40 µm and a diameter or a side length of 180 µm, and on the lower portion of the inner surface of the electrolyte storage device 100, the structures may have a height of 60 µm and a diameter or a side length of 220 µm. Furthermore, the pattern 110 may be formed such that the spacing between the structures becomes narrower toward the upper portion of the inner surface of the electrolyte storage device 100.

In other words, a first pattern 110 may be formed in a first area of the inner surface of the electrolyte storage device 100, and a second pattern 110 having structures different from those of the first pattern 110 may be formed in a second area of the inner surface of the electrolyte storage device 100.

Hereinafter, a method of forming the pattern 110 on the inner surface of the electrolyte storage device 100 will be described. The method of forming the pattern 110 on the inner surface of the electrolyte storage device 100 may be a part of a method of manufacturing the electrolyte storage device 100.

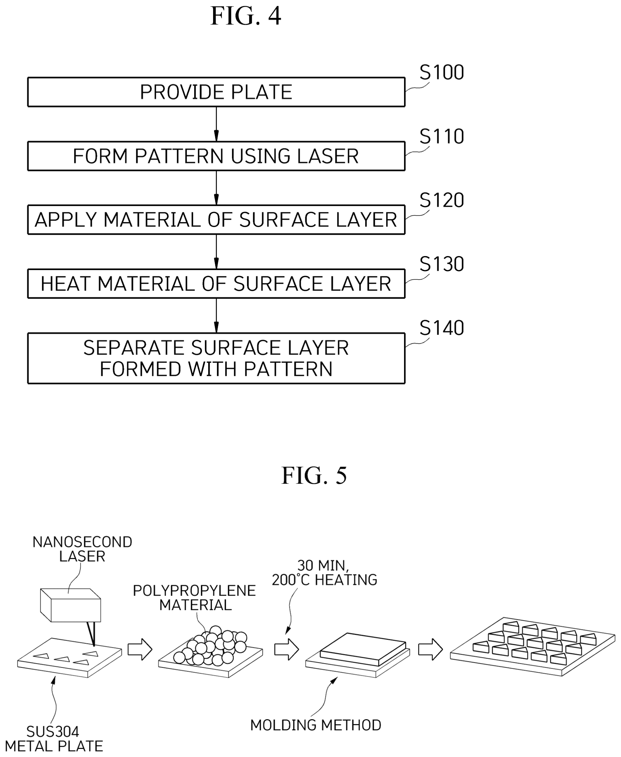

FIG. 4 is a flowchart of a method of forming the pattern according to a first embodiment of the present disclosure. FIG. 5 is a diagram for describing the pattern forming method according to the first embodiment of the present disclosure.

Referring to FIG. 4, the pattern forming method according to the first embodiment of the present disclosure may include steps S100 to S140.

Step S100 may include preparing a plate. The plate may be made of a material similar to that of a mold used in a process of manufacturing the electrolyte storage device 100. For example, the plate may be made of a material including any one of stainless steel, a stainless alloy, a titanium alloy, a nickel alloy, and carbon fiber. As an example, 304 stainless steel, which corresponds to SUS304 in the Japanese Industrial Standards (JIS), may be used as a stainless-steel-based material.

Step S110 may include forming the pattern 110 on one surface of the plate using a laser. The pattern 110 may be formed on one surface of the plate in an engraved shape using the laser. The laser may include a nanosecond laser, a femtosecond laser, or a picosecond laser. The pattern 110 may be formed on the one surface of the plate by using a laser texturing technique. For example, the conditions of laser texturing may be set by adjusting parameters such as scanning frequency, output power, scanning speed, or the number of scans. For example, the scanning frequency may be set in a range from 17 kHz to 23 kHz. The output power may be set in a range from 1.8 W to 2.2 W. The scanning speed may be set in a range from 0.5 mm/s to 1.5 mm/s. The number of scans may be set in a range from 3 cycles to 8 cycles.

Step S120 may include applying a material of a surface layer onto the one surface of the plate on which the pattern 110 is formed. The surface layer may refer to a layer that forms the inner surface of the electrolyte storage device 100. A resin including any one of polypropylene, polyethylene, polystyrene, polyamide, or polyethylene terephthalate may be used as the surface layer material.

Step S130 may include heating the surface layer material applied to the one surface of the plate. For example, the surface layer material applied to the one surface of the plate may be heated using a heat source at 200°C for 30 minutes, and as a result of the heating, the surface layer material may form a solidified surface layer. Since the engraved pattern 110 is formed in the plate, the pattern 110 of the plate may be imprinted onto the surface layer. In other words, the pattern of the plate may be imprinted and formed onto the surface layer through a molding technique.

Step S140 may include separating the surface layer in which the pattern 110 is formed. The solidified surface layer may be separated from the plate, thereby obtaining the surface layer in which the pattern 110 is formed.

Thereafter, the surface layer in which the pattern 110 is formed may be used to fabricate the inner surface of the electrolyte storage device 100. For example, the step of attaching the surface layer in which the pattern 110 is formed to the inner surface of the electrolyte storage device 100 may further be included.

Referring to FIG. 5, the pattern forming method according to the first embodiment of the present disclosure is illustrated. The pattern forming method according to the first embodiment of the present disclosure may include (i) preparing the plate and forming the pattern 110 on one surface of the plate in an engraved shape using a laser, (ii) applying the surface layer material onto the surface of the plate on which the pattern 110 is formed, (iii) heating the surface layer material applied to the plate, and (iv) separating the surface layer in which the pattern 110 is formed, from the plate.

In the pattern forming method of the first embodiment of the present disclosure, the pattern 110 may be efficiently formed on the inner surface of the electrolyte storage devices 100. Particularly, by utilizing a laser texturing technique, the pattern 110 may be formed over a relatively large area in a short time, and the pattern 110 may be formed by a physical process without using a chemical process. Furthermore, there is an advantage in that the pattern 110 may be formed in a short time even on surfaces of polymer materials other than polypropylene.

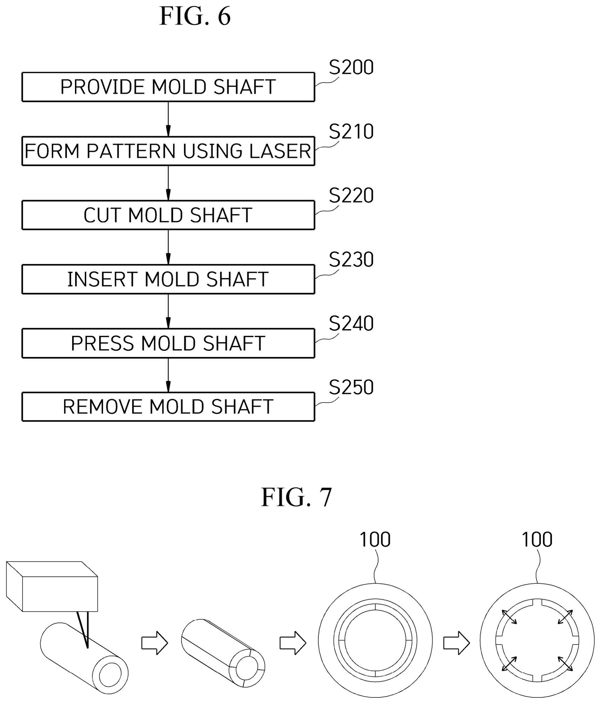

FIG. 6 is a flowchart of a method of forming the pattern according to a second embodiment of the present disclosure. FIG. 7 is a diagram for describing the pattern forming method according to the second embodiment of the present disclosure.

Referring to FIG. 6, the pattern forming method according to the second embodiment of the present disclosure may include steps S200 to S250.

Step S200 may include providing a mold shaft. The mold shaft may be formed of a material similar to that of the mold used in the process of manufacturing the electrolyte storage device 100. For example, the mold shaft may be formed of a material including any one of stainless steel, a stainless steel alloy, a titanium alloy, a nickel alloy, and carbon fiber. For example, 304 stainless steel, which corresponds to SUS304 in the JIS, may be used as a stainless-steel-based material.

Step S210 may include forming the pattern 110 on an outer surface of the mold shaft using a laser. The pattern 110 may be formed in an engraved shape on the outer surface of the mold shaft by using the laser. A nano-second laser may be used as the laser, and the pattern 110 may be formed on the mold shaft by a laser texturing technique. For example, the conditions of laser texturing may be set by adjusting parameters such as scanning frequency, output power, scanning speed, or the number of scans. For instance, the scanning frequency may be set in a range from 17 kHz to 23 kHz. The output power may be set in a range from 1.8 W to 2.2 W. The scanning speed may be set in a range from 0.5 mm/s to 1.5 mm/s. The number of scans may be set in a range from 3 cycles to 8 cycles.

Step S220 may include cutting the mold shaft in which the pattern 110 is formed. The mold shaft in which the pattern 110 is formed may be cut at regular intervals along a longitudinal direction. For example, the mold shaft in which the pattern 110 is formed may be divided into 4 to 8 sections at regular intervals, and the pattern 110 formed on the outer surface of the mold shaft may be prevented from being cut.

Step S230 may include inserting the cut mold shaft into the interior of the electrolyte storage device 100. The cut mold shaft may be inserted into a location where the pattern 110 is to be formed inside the electrolyte storage device 100.

Step S240 may include pressing the inserted mold shaft onto the inner surface of the electrolyte storage device 100. Since the pattern 110 is formed on the outer surface of the mold shaft, the pattern 110 of the mold shaft may be replicated onto the inner surface of the electrolyte storage device 100. Because the mold shaft is cut at regular intervals, a gap may be formed between adjacent cut portions of the mold shaft during pressing. The gap between the pressed cut portions of the mold shaft may be formed to match the spacing between adjacent structures of the pattern 110.

Step S250 may include removing the mold shaft from the electrolyte storage device 100.

Referring to FIG. 7, the pattern forming method according to the second embodiment of the present disclosure is illustrated. The pattern forming method according to the second embodiment of the present disclosure may include (i) preparing the mold shaft and forming the pattern 110 on the outer surface of the mold shaft using the laser, (ii) cutting the mold shaft, in which the pattern 110 is formed, at regular intervals; (iii) inserting the cut mold shaft into the interior of the electrolyte storage device 100 and pressing the cut mold shaft, and (iv) removing the mold shaft from the electrolyte storage device 100.

In the pattern forming method of the second embodiment of the present disclosure, the shape of the pattern 110 desired by a user may be designed without restriction, and the shape of the pattern 110 may be adjusted depending on the purpose, thereby allowing flexible design at the nano or micro scale.

The above-described pattern forming methods according to the first and second embodiments of the present disclosure have been described with reference to the flowcharts shown in the drawings. For brief explanation, the methods have been illustrated and described as a series of blocks, but the present disclosure is not limited to the order of the blocks. In other words, some blocks may be executed simultaneously with other blocks or in a different order from those illustrated and described in this specification, and various diverges, flow paths, block sequences may also be implemented if they give the equivalent or similar results. In addition, to implement the method described in the specification, it is also possible not to demand all blocks.

In the description with reference to FIGS. 4 and 6, each step may be further divided into additional steps, or some steps may be combined as fewer steps, based on implementation embodiments of the present disclosure. Furthermore, some steps may be omitted as needed, and a sequence of steps may be changed.

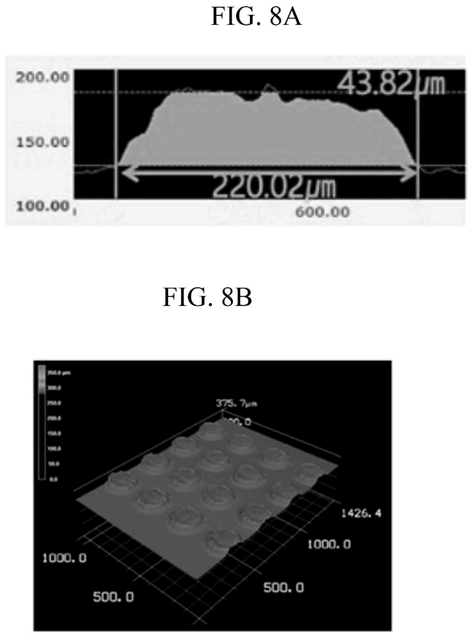

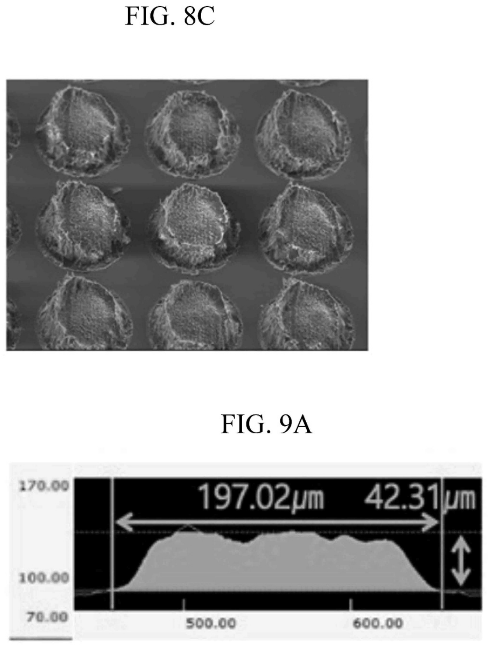

FIGS. 8 to 12 are diagrams for describing a pattern 110 according to embodiments of the present disclosure.

As described above, the pattern 110 may be formed on the inner surface of the electrolyte storage device 100 by using the pattern forming method according to the first or second embodiment of the present disclosure. After the pattern 110 is formed on the inner surface of the electrolyte storage device 100, the shape and size of the formed pattern 110 may be checked using a three-dimensional (3D) laser confocal microscope and a scanning electron microscope (SEM).

The pattern 110 according to embodiments of the present disclosure may include 3D structures having various shapes and sizes, and may be configured to include 3D structures having optimal shapes and sizes capable of enhancing hydrophobicity and reducing adhesion on the inner surface of the electrolyte storage device 100.

FIG. 8 (A to C) is a diagram illustrating a pattern 110 according to a first embodiment of the present disclosure. The pattern 110 according to the first embodiment of the present disclosure may be configured to include circular 3D structures as a circular pattern 110.

FIG. 8(A) is an image illustrating an example of the size of a circular structure according to the first embodiment of the present disclosure. FIG. 8(B) is an image showing the circular pattern 110 according to the first embodiment of the present disclosure observed using the 3D laser confocal microscope. FIG. 8(C) is an image showing the circular pattern 110 according to the first embodiment observed using the SEM.

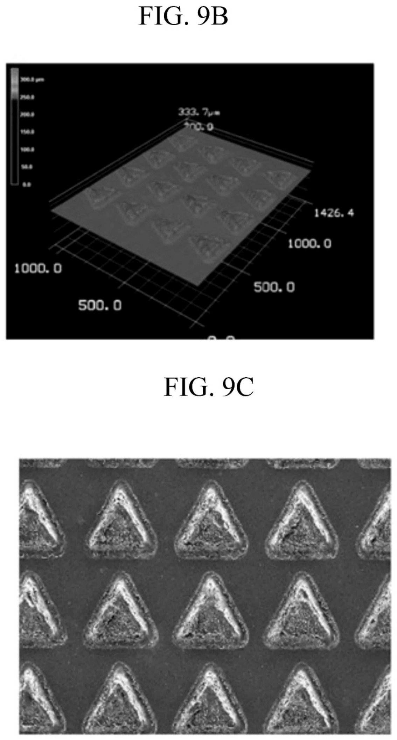

FIG. 9 (A to C) is a diagram illustrating the pattern 110 according to a second embodiment of the present disclosure. The pattern 110 according to the second embodiment of the present disclosure may be configured to include equilateral triangular 3D structures as an equilateral triangular pattern 110.

FIG. 9(A) is an image illustrating an example of the size of equilateral triangular structures according to the second embodiment of the present disclosure. FIG. 9(B) is an image showing the equilateral triangular pattern 110 according to the second embodiment of the present disclosure observed using the 3D laser confocal microscope. FIG. 9(C) is an image showing the equilateral triangular pattern 110 according to the second embodiment of the present disclosure observed using the SEM.

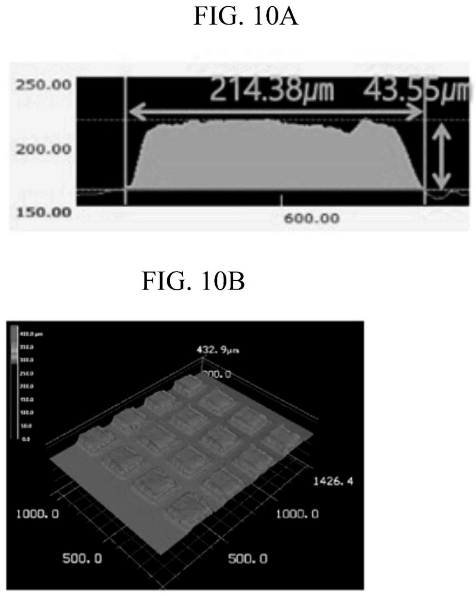

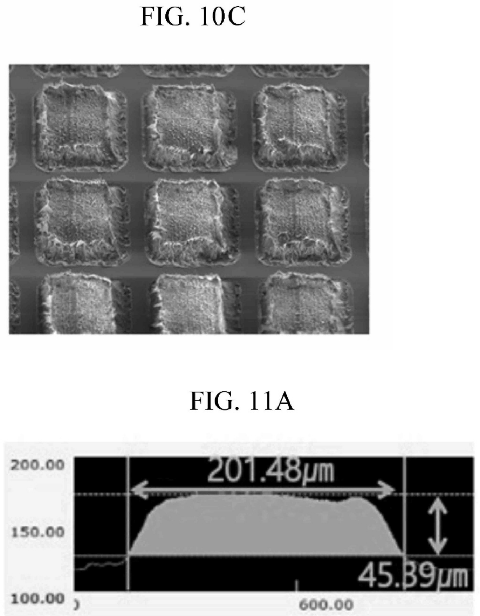

FIG. 10 (A to C) is a diagram illustrating the pattern 110 according to a third embodiment of the present disclosure. The pattern 110 according to the third embodiment of the present disclosure may be configured to include square 3D structures as a square pattern 110.

FIG. 10(A) is an image illustrating an example of the size of square structures according to the third embodiment of the present disclosure. FIG. 10(B) is an image showing the square pattern 110 according to the third embodiment of the present disclosure observed using the 3D laser confocal microscope. FIG. 10(C) is an image showing the square pattern 110 according to the third embodiment of the present disclosure observed using the SEM.

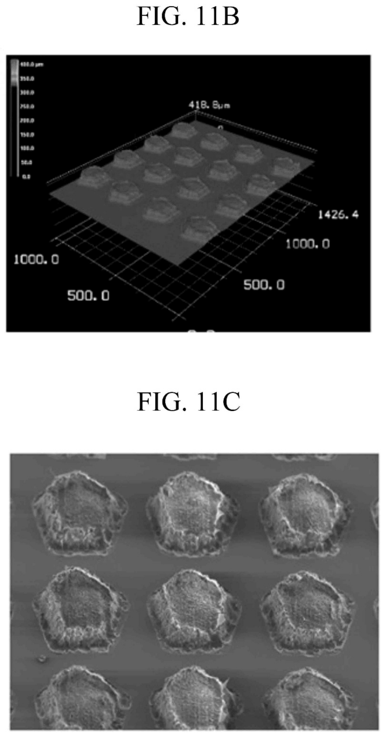

FIG. 11 (A to C) is a diagram illustrating the pattern 110 according to a fourth embodiment of the present disclosure. The pattern 110 according to the fourth embodiment of the present disclosure may be configured to include regular pentagonal 3D structures as a regular pentagonal pattern 110.

FIG. 11(A) is an image illustrating an example of the size of regular pentagonal structures according to the fourth embodiment of the present disclosure. FIG. 11(B) is an image showing the regular pentagonal pattern 110 according to the fourth embodiment of the present disclosure observed using the 3D laser confocal microscope. FIG. 11(C) is an image showing the regular pentagonal pattern 110 according to the fourth embodiment of the present disclosure observed using the SEM.

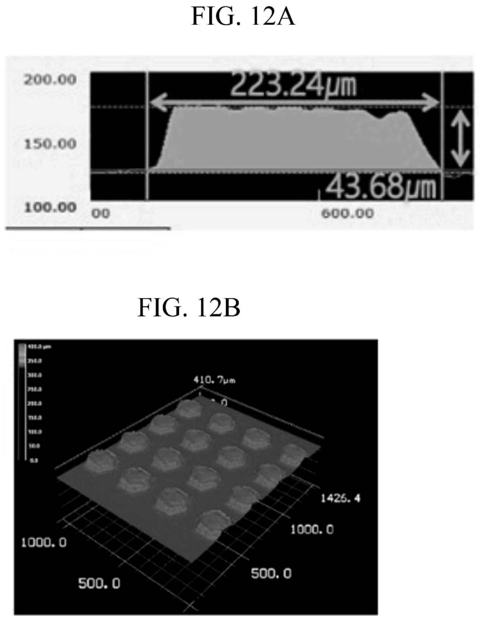

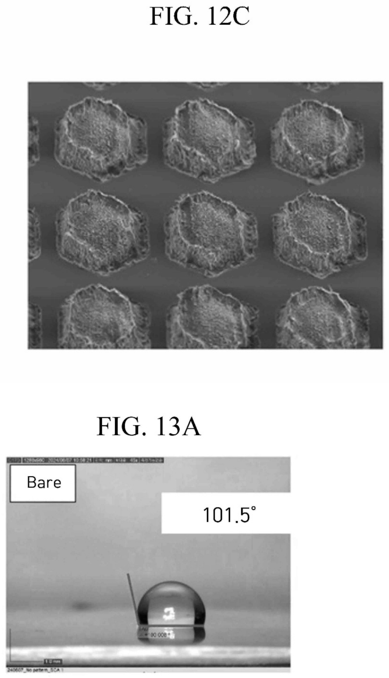

FIG. 12 (A to C) is a diagram illustrating the pattern 110 according to a fifth embodiment of the present disclosure. The pattern 110 according to the fifth embodiment of the present disclosure may be configured to include regular hexagonal 3D structures as a regular hexagonal pattern 110.

FIG. 12(A) is an image illustrating an example of the size of regular hexagonal structures according to the fifth embodiment of the present disclosure. FIG. 12(B) is an image showing the regular hexagonal pattern 110 according to the fifth embodiment of the present disclosure observed using the 3D laser confocal microscope. FIG. 12(C) is an image showing the regular hexagonal pattern 110 according to the fifth embodiment of the present disclosure observed using the SEM.

The pattern 110 according to the first to fifth embodiments of the present disclosure may increase the static contact angle between the inner surface of the electrolyte storage device 100 and the electrolyte, thereby enhancing the surface hydrophobicity. Accordingly, the adhesion on the inner surface of the electrolyte storage device 100 may be reduced, thereby reducing an incomplete injection phenomenon in which the electrolyte fails to be injected into the secondary battery.

The static contact angle may refer to an angle formed by liquid on a solid surface. Depending on the static contact angle, the wettability, surface energy, and surface properties of the solid surface related to water may vary. For example, as the static contact angle increases, the wettability of the solid surface may increase, the surface energy may be lowered, and the hydrophobicity may increase. Accordingly, the hydrophobicity of the inner surface may be determined by measuring the static contact angle of the inner surface of the electrolyte storage devices 100 in which the pattern 110 is formed.

In the present disclosure, the static contact angle may be measured using a sessile drop method. For example, 2 µL of water may be dropped onto the inner surface of the electrolyte storage device 100 in which the pattern 110 is formed, and the static contact angle may be measured after 10 seconds. In addition, in order to improve measurement reliability, the measurement may be repeated at three or more different points.

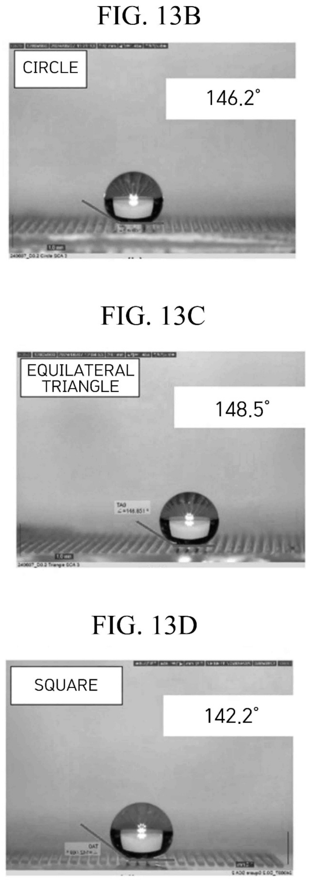

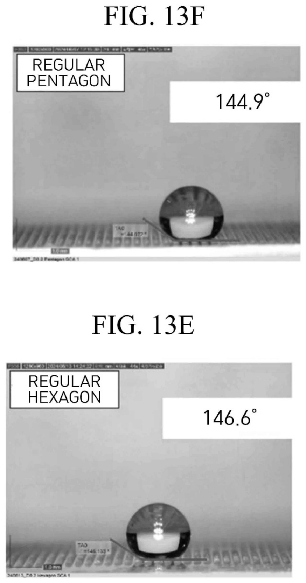

FIGS. 13 (A to F) and 14 are photos and diagrams illustrating the static contact angle for each pattern 110 according to embodiments of the present disclosure, and show the static contact angle measured for each pattern 110 using the above-described sessile drop method.

Referring to FIGS. 13 (A to F) and 14, the static contact angle for each pattern 110 measured using the above-described sessile drop method is 146.2° for the circular pattern 110 (FIG. 13B), 148.5° for the equilateral triangular pattern 110 (FIG. 13C), 142.2° for the square pattern 110 (FIG. 13D), 144.9° for the regular pentagonal pattern 110 (FIG. 13F), and 146.6° for the regular hexagonal pattern 110 (FIG. 13E).

It can be confirmed that the static contact angles for the respective patterns 110 are all increased compared to the static contact angle (101.5°) in the absence of the pattern 110 (bare surface - FIG. 13A). Accordingly, the patterns 110 according to the first to fifth embodiments of the present disclosure may increase the static contact angle between the inner surface of the electrolyte storage device 100 and the electrolyte 30, thereby enhancing the surface hydrophobicity.

The foregoing description indicates that the electrolyte 30 in contact with the inner surface of the electrolyte storage device 100, in which the pattern 110 is formed, is in a Cassie-Baxter state, thereby confirming that the surface hydrophobicity is increased. In other words, the micro-scale fine structures of the pattern 110 support the electrolyte 30 in such a way that the electrolyte 30 does not fill the cavities between the fine structures of the pattern 110 and remains suspended above the surface, forming a Cassie-Baxter state.

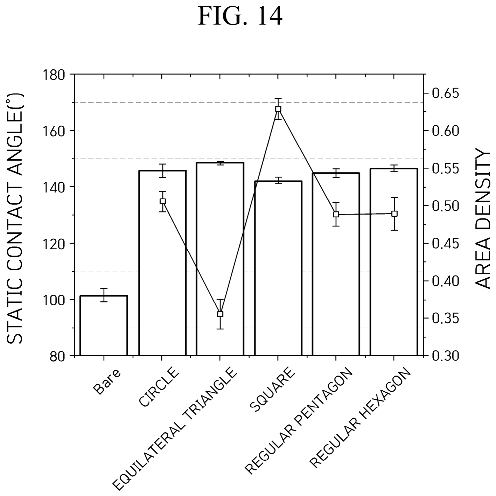

FIG. 14 illustrates in a table an area density for each pattern 110, and the area density is defined as a value obtained by dividing a surface area of the pattern 110 formed in the electrolyte storage device 100 by a surface area of the electrolyte storage device 100.

Referring to the table, it can be seen that the area density of the structures and the static contact angle tend to be inversely proportional, and that the smaller the area of the pattern 110 formed on the surface, the greater the hydrophobicity, resulting in an increase in the area density. The foregoing description shows the correlation between the surface area of the pattern 110 and the increase in hydrophobicity.

Accordingly, in order to increase the surface hydrophobicity of the electrolyte storage devices 100 to a certain level or higher, the pattern 110 according to embodiments of the present disclosure may be formed such that the static contact angle of the structures described above is 110 degrees or more, or the area density of the structures is 0.3 or more.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present disclosure may not be limited thereto.

A negative electrode active material may include a material capable of reversibly Intercalation/deintercalation with respect to lithium ions, lithium metal, an alloy of lithium metal, a material capable of doping and dedoping with respect to lithium, or transition metal oxide.

The material capable of reversibly Intercalation/deintercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

The electrolyte for a lithium secondary battery may include a non-aqueous organic solvent and a lithium salt.

The non-aqueous organic solvent may serve as a medium through which ions involved in electrochemical reactions of the battery can move.

The non-aqueous organic solvent may be a carbonate-based, ester-based, ether-based, ketone-based, or alcohol-based solvent, a non-protic solvent, or a combination thereof, and may be used alone or in a mixture of two or more types of solvents.

Furthermore, when a carbonate-based solvent is used, a cyclic carbonate and a linear carbonate may be used in combination as the carbonate-based solvent.

Depending on the type of lithium secondary battery, a separator may be present between a positive electrode and a negative electrode. The separator may be formed of polyethylene, polypropylene, polyvinylidene fluoride, or a multilayer film including two or more layers thereof.

The separator may include a porous substrate and a coating layer formed on one or both surfaces of the porous substrate, the coating layer including an organic material, an inorganic material, or a combination thereof.

The organic material may include a polyvinylidene fluoride-based polymer or a (meth)acrylic-based polymer.

The inorganic material may include inorganic particles selected from the group consisting of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but is not limited thereto.

The organic material and the inorganic material may be present in a mixed form within a single coating layer, or may be present in a stacked form in which a coating layer including the organic material and a coating layer including the inorganic material are stacked.

Although the present disclosure has been described above in connection with the limited embodiments and drawings, the present disclosure is not limited to the embodiments. A person having ordinary knowledge in the art to which the present disclosure pertains may modify and change the present disclosure within the scope of the present disclosure and the equivalent range of the following claims.

## Claims

1. An electrolyte storage device comprising:
an electrolyte housing configured to store an electrolyte; and
an inlet port located in one surface of the electrolyte housing, and configured to enable the electrolyte to be injected into a secondary battery,
wherein the electrolyte housing includes on an inner surface thereof a pattern including three-dimensional structures successively arranged.

2. The electrolyte storage device as claimed in claim 1, wherein each of the structures is formed in a circular, triangular, quadrangular, pentagonal, or hexagonal shape.

3. The electrolyte storage device as claimed in claim 2, wherein each of the structures has a height ranging from 40 µm to 60 µm.

4. The electrolyte storage device as claimed in claim 2 or claim 3, wherein each of the structures has a diameter or side length ranging from 180 µm to 220 µm.

5. The electrolyte storage device as claimed in claim 2, claim 3 or claim 4 wherein the pattern has a spacing between the structures in a range from 80 µm to 120 µm.

6. The electrolyte storage device as claimed in any one of the preceding claims, wherein the inner surface formed with the pattern is formed by heating a resin including any one of polypropylene, polyethylene, polystyrene, polyamide, or polyethylene terephthalate, the resin being applied to a plate in which an engraved shape of the pattern is formed.

7. The electrolyte storage device as claimed in any one of the preceding claims, wherein the pattern is formed by pressing a mold shaft, in which an engraved shape of the pattern is formed, onto the inner surface.

8. The electrolyte storage device as claimed in any one of the preceding claims, wherein a first pattern is formed in a first area of the inner surface, and a second pattern including structures different from structures of the first pattern is formed in a second area of the inner surface.

9. The electrolyte storage device as claimed in any one of the preceding claims, wherein the pattern is formed on 70% or more of an area of the inner surface.

10. The electrolyte storage device as claimed in any one of the preceding claims, wherein the pattern is formed such that a static contact angle of each of the structures is 110 degrees or more.

11. The electrolyte storage device as claimed in any one of the preceding claims, wherein the pattern is formed such that an area density of the structures is 0.3 or more.

12. A method of manufacturing an electrolyte storage device configured to store an electrolyte and inject the electrolyte into a secondary battery, the method comprising:
providing a plate;
forming an engraved shape of a pattern on one surface of the plate using a laser, the pattern including three-dimensional structures successively arranged;
applying a material of a surface layer to the one surface of the plate;
heating the material of the surface layer;
separating the solidified surface layer from the plate; and
attaching the solidified surface layer to an inner surface of the electrolyte storage device.

13. The method as claimed in claim 12, wherein the plate is formed of a material including any one of stainless steel, a stainless alloy, a titanium alloy, a nickel alloy, or carbon fiber.

14. The method as claimed in claim 12 or claim 13, wherein the material of the surface layer includes resin comprising any one of polypropylene, polyethylene, polystyrene, polyamide, or polyethylene terephthalate.

15. A method of manufacturing an electrolyte storage device configured to store an electrolyte and inject the electrolyte into a secondary battery, the method comprising:
providing a mold shaft;
forming an engraved shape of a pattern on an outer surface of the mold shaft using a laser, the pattern including three-dimensional structures successively arranged;
cutting the mold shaft at regular intervals;
inserting the cut mold shaft into an interior of the electrolyte storage device;
pressing the cut mold shaft onto an inner surface of the electrolyte storage device; and
removing the mold shaft from the electrolyte storage device.
